Europäisches Patentamt

European Patent Office

Office européen des brevets

(11) Veröffentlichungsnummer: **0 596 295 A1**

## (12) EUROPÄISCHE PATENTANMELDUNG

(21) Anmeldenummer: 93116671.4

(51) Int. Cl.⁵: **B27K 5/02**, C09B 67/00

(22) Anmeldetag: **15.10.93**

(30) Priorität: **03.11.92 DE 4237063**

(43) Veröffentlichungstag der Anmeldung:
**11.05.94 Patentblatt 94/19**

(84) Benannte Vertragsstaaten:
**DE ES FR GB IT**

(71) Anmelder: **A.W. Faber- Castell Unternehmensverwaltung GmbH & Co.**
**Nürnberger Strasse 2**
**D-90547 Stein(DE)**

(72) Erfinder: **Geiger,Werner,Dr.**
**Stuttgarter Strasse 24**
**D-90449 Nürnberg(DE)**

(74) Vertreter: **Tergau, Enno, Dipl.-Ing.**
**Mögeldorfer Hauptstrasse 51**
**D-90482 Nürnberg (DE)**

(54) **Beize zum Schwarzfärben von Holz.**

(57) Bei einer Beize zum Schwarzfärben von Holz, bestehend im wesentlichen aus einem Lösungsmittel und einem darin gelösten Schwarz-Färbemittel, besteht das Färbemittel aus einer Mischung aus mehreren Buntfarbstoffen.

EP 0 596 295 A1

Die Erfindung betrifft eine Beize zum Schwarzfärben von Holz mit den im Oberbegriff des Anspruches 1 genannten Merkmalen.

Derartige Beizen sind beispielsweise aus der Möbelindustrie bekannt und dienen dazu, die Oberfläche eines Holzes, beispielsweise eines Furnieres, unter Aufrechterhaltung seiner natürlichen Maserung schwarz einzufärben. Dazu werden die Oberflächen mit der einen schwarzen Farbstoff oder ein schwarzes Pigment enthaltenden Beize bestrichen oder besprüht oder das Holz wird in die Beize eingetaucht. Dabei nehmen nur die oberflächennahen Schichten des Holzes Beize auf, was aber für den vorgesehenen Zweck ausreicht, es soll ja nur eine Einfärbung der Oberfläche erreicht werden. Die bekannten Beizen sind also zum Durchfärben von Holz, beispielsweise von Brettchen zur Herstellung von Holzstiften, nicht geeignet. Es sind nun Verfahren zum Durchfärben von Hölzern bekannt, bei denen die Beizen unter erhöhtem Druck und erhöhter Temperatur längere Zeit auf das Holz einwirken. Ein solches Verfahren ist in der DE-PS 439 226 beschrieben. Derartige Verfahren führen jedoch nur bei Buntfarbstoffen zu brauchbaren Ergebnissen. Mit Schwarzbeizen wird dagegen nur eine unvollständige Durchfärbung erreicht.

Das Penetriervermögen von Holzbeizen hängt wesentlich von den Parametern Viskosität, Oberflächenspannung, Druck, Temperatur und Behandlungsdauer ab. Es hat sich nun gezeigt, daß durch bloße Optimierung dieser Parameter, etwa durch Zugabe von die Oberflächenspannung verringernden Netzmitteln oder durch Erhöhung der Beiztemperatur die Eindringtiefe bzw. der Durchfärbegrad von herkömmlichen Schwarzbeizen nicht zufriedenstellend verbessert werden konnte. Dies liegt u.a. auch daran, daß Druck, Temperatur und Behandlungsdauer nicht beliebig gesteigert werden können, da die Widerstandsfähigkeit des Holzes und der Farbstoffe begrenzt sind. Darüber hinaus hängt das Penetriervermögen der Beizen von der Art des Holzes ab. Je dichter und engporiger eine Holzsorte ist, desto schlechter ist das Penetriervermögen der bekannten Beizen. Ein wesentlicher Einflußfaktor ist das Farbmolekül selbst. Es wird um so leichter in die kapillaren Hohlräume des Holzes eindringen können, je kleiner es ist. Der Grund für die schlechtere Eindringfähigkeit von Schwarzbeizen kann etwa darin gesehen werden, daß die schwarzen Farbmoleküle im Vergleich zu denen von Buntfarbstoffen größer sind und meist eine komplexere Struktur aufweisen. Die Folge ist, daß durch sterische Behinderungen und durch Agglomerationseffekte das Porensystem des Holzes verstopft wird, wodurch ein Eindringen von weiteren Farbstoffmolekülen stark behindert ist. Es wurden Versuche mit schwarzen Farbstoffen, wie CI RBK 31, CI DBK 171, CI DBK 168, CI PBK 7 und CI DBK 162:1 durchgeführt. Dabei wurden Brettchen mit 5 mm Dicke in einem Autoklaven 24 Stunden bei 60 - 70°C und einem Druck von 15 bar behandelt. Bei keinem der Farbstoffe konnte eine gleichmäßige Durchfärbung erreicht werden. Die verwendeten Farbstofflösungen waren ca. 1%ig. Eine Erhöhung der Farbstoffkonzentration führte zu noch schlechteren Ergebnissen.

In der US-PS 2,000,121 wird vorgeschlagen, die Eindringfähigkeit insbesondere von Anilinfarbstoffe enthaltenden Holzbeizen durch Verwendung von Lösungsmittelgemischen zu erhöhen, die beispielsweise Verbindungen wie Diethylenglykol-Monoethylether, Methylalkohol und Toluol enthalten. Selbst wenn mit diesem Vorschlag eine verbesserte Schwarzdurchfärbung zu erreichen wäre, wäre er schon allein aus Umweltschutzgründen abzulehnen. Auch würde während der Herstellung derartiger Holzgegenstände, wie etwa Holzspielzeuge, Schreib- und Kosmetikstifte, eine erhebliche Gesundheitsgefährdung für die damit hantierenden Personen ausgehen.

Davon ausgehend ist es die Aufgabe der Erfindung, Schwarz-Beizen vorzusehen, deren Penetrierfähigkeit gegenüber den herkömmlichen Schwarzbeizen derart verbessert ist, daß praktisch unabhängig von der gegebenen Holzart eine vollständige Durchführung möglich ist. Diese Aufgabe wird durch die kennzeichnenden Merkmale des Anspruches 1 gelöst. Danach setzt sich das für die Schwarzfärbung verantwortliche Färbemittel aus mehreren Buntfarbstoffen zusammen, die in Summe das sichtbare Licht praktisch zu 100% absorbieren, also durch Farbmischung die Farbe Schwarz ergeben. Wie durch verschiedene Versuchsreihen gezeigt werden konnte, weist die erfindungsgemäße Beize eine von der jeweiligen Holzart nur wenig abhängige gute Penetrierfähigkeit auf.

Der Erfindung liegt die Beobachtung zugrunde, daß bunte Beizen in der Regel eine wesentlich bessere Penetrierfähigkeit aufweisen als Beizen mit einem schwarzen Farbstoff. Der Grund für diesen Effekt könnte, wie bereits oben ausgeführt, darin liegen, daß die gegenüber den Buntfarbstoffen größeren Moleküle der schwarzen Farbstoffe in den Kapillarräumen zwischen den Holzfasern leichter haften bleiben und zu einer Verstopfung des Hohlraumsystems des Holzes führen, so daß ein weiteres Eindringen von Beizflüssigkeit behindert bzw. völlig verhindert ist. Es ist auch denkbar, daß die bekanntermaßen geringere Löslichkeit der für Beizzwecke verwendeten Schwarzfarbstoffe hierbei eine Rolle spielt. Durch die Quellung des Holzes wird nämlich Lösungsmittel aus der Beize quasi "abgesaugt". Mit der damit verbundenen Aufkonzentrierung der Beize geht ein gegenüber leichter löslichen Buntfarbstoffen verstärktes Ausfällen des Schwarzfarbstoffes einher, was ebenfalls zu einem "Verstopfen" der Kapillaren führen würde.

Die Lehre gemäß Anspruch 2 hat den Vorteil, daß Wasser als Lösungsmittel zum einen toxikologisch unbedenklich und umweltfreundlich ist. Zum anderen eignet es sich für ein breites Spektrum von gängigen Holzfarbstoffen. Auch tritt der von organischen Lösungsmitteln bekannte Effekt des Hochziehens der Holzfasern beim Trocknen nicht auf. Das sich in vielen Fällen an den Beizvorgang anschließende Polieren der Holzoberfläche ist dadurch erleichtert. Durch die Verwendung von lebensmittelechten Farbstoffen nach Anspruch 3 eignet sich die erfindungsgemäße Schwarzbeize auch zum Einfärben von Holzartikeln, von denen keine gesundheitliche Gefahr für den Anwender ausgehen darf. Solche Artikel sind beispielsweise Holzspielzeuge oder die Holzummantelung von Schreib- und Kosmetikstiften.

In Anspruch 4 sind die Bestandteile einer vorteilhaften Farbstoffmischung genannt. Es hat sich gezeigt, daß gerade diese Farbstoffkombination eine besonders gute Penetrierfähigkeit der Beize gewährleistet. Ein weiterer Vorteil dieser Farbstoffe liegt darin, daß es handelsübliche und kostengünstige Farbstoffe sind. Die Farbstoffe CI Acid Yellow 23 und Acid Red 18 sind außerdem nicht-toxische Lebensmittelfarbstoffe. Das Mischungsverhältnis der Farbstoffe gemäß Anspruch 5 gewährleistet eine tiefschwarze Färbung.

Durch die in den Ansprüchen 6 und 7 genannten Maßnahmen wird gewährleistet, daß zum einen die Oberflächenspannung des Wassers herabgesetzt und damit die Eindringfähigkeit der Beize erhöht wird. Das Konservierungsmittel verhindert den Befall des Holzes mit holzzersetzenden Organismen bei länger dauernder Lagerung vor allem in feuchtwarmen Klimata.

In den Ansprüchen 8 und 9 sind vorteilhafte Rezepturen für erfindungsgemäße Beizen angegeben. Die Zugabe einer Wachsdispersion nach den Ansprüchen 10 und 11 bewirkt, daß das Holz weniger leicht Feuchtigkeit aufnehmen kann und durch das Wachs gegen Schädlingsbefall geschützt ist, so daß ein Zusatz: von Konservierungsmitteln gegebenenfalls unterbleiben könnte. Die Wachsdispersion bewirkt außerdem, daß sich ein aus einem derartig behandelten Holz hergestellter Stift leichter spitzen läßt und die vom Spitzkegel abgedrehten Späne einen größeren Zusammenhalt aufweisen, also nicht so leicht zerbröseln.

In den Ansprüchen 12 und 13 ist ein vorteilhaftes Verfahren zum Durchfärben von Holz mit einer erfindungsgemäßen Beize angegeben. Je nach Holzart können die in Anspruch 13 angegebenen Parameter variiert werden. Sie lassen sich jedoch leicht durch einfache Versuche auf die jeweils verwendete Holzart einstellen.

Die Erfindung wird im folgenden anhand von Beispielen näher erläutert:

Beispiel 1:

| CI Acid Yellow 23: | 0,8 % |
|---|---|
| CI Acid Red 18: | 2,8 % |
| CI Acid Blue 9: | 1,4 % |
| 30%ige wässrige Paraffindispersion: | 8,3 % |
| Polyoxyethylen-(20)-sorbitan-monolaurat | 0,1 % |
| Chlorazetamid/Natriumbenzoat-Mischung: | 0,2 % |
| Rest Wasser. | |

Die Beize wird wie folgt angesetzt: Zunächst wird das Wasser in der benötigten Menge in ein Gefäß gegeben und das Netzmittel Polyoxyethylen-(20)-sorbitan-monolaurat darin aufgelöst. Als nächstes wird das Konservierungsmittel, eine Mischung aus Chlorazetamid und Natriumbenzoat und danach die Farbstoffe und die Praffindispersion zugesetzt und verrührt. Letztere enthält 2 Gew. % Nonylphenolglykolether als Dispergiermittel.

Der Farbstoff CI Acid Yellow 23 ist ein Lebensmittelfarbstoff, dessen wissenschaftlicher Name 5-Hydroxy-1-(4-sulfophenyl)-4-(4-sulfophenylazo)-1H-pyrazol-3-carbonsäure (Trinatriumsalz) ist. CI Acid Red 18, ebenfalls ein Lebensmittelfarbstoff, hat die Summenformel $C_{20}H_{11}N_2Na_3O_{10}S_3$. CI Acid Blue 9 ist ein von der BASF unter dem Handelsnahmen Basacidblau 755 vertriebener anionischer Farbstoff. Bei dem in der Rezeptur angegebenen Mischungsverhältnis der genannten Farbstoffe wird ein tiefschwarzer Farbton erhalten.

Sollen beispielsweise zur Herstellung der Holzummantelung von Kosmetik-oder Schreibstiften etwa 5 mm starke Brettchen durchgefärbt werden, so werden diese in einem Färbeautoklaven bei einer Temperatur von 60 - 70° C und einem Druck von 15 bar 24 Stunden lang mit der Beize behandelt. Die Behandlungsdauer, Druck und Temperatur hängen natürlich von der Art des Holzes und auch davon ab, ob es sich um Kern- oder Splintholz handelt. Insbesondere bei sehr engporigen festen Hölzern kann sich die Behandlungsdauer zu längeren Zeiten hin verschieben. Im vorliegenden Fall wurde Holz der kalifornischen Incense-Ceder verwendet. Nach dem Ende der Behandlung im Färbeautoklaven wird dieser druckentlastet und die nun vollständig schwarz durchgefärbten Brettchen entnommen. Die Brettchen werden anschließend einer Trocknung unterzogen. Bei den aus diesen Brettchen hergestellten Stiften weist die Holzummantelung über ihren gesamten Querschnitt einheitlich eine scharze Färbung auf.

Das der Beize zugesetzte Paraffin lagert sich in den Hohl- bzw. Kapillarräumen des Holzes ab und macht es weicher Die Folge ist, daß sich der daraus hergestellte Stift leichter spitzen läßt und daß die beim Spitzen vom Spitzkonus des Stiftes abgeschälten Späne nicht so leicht zerbrechen und zu Krümeln zerfallen.

Beispiel 2:

| | |
|---|---|
| CI Acid Yellow 23: | 0,8 % |
| CI Acid Red 18: | 2,8 % |
| CI Acid Blue 9: | 1,4 % |
| Polyoxyethylen-(20)-sorbitan-monolaurat: | 0,1 % |
| Chlorazetamid/Natriumbenzoat-Mischung: | 0,2 % |
| Rest Wasser. | |

Diese wachsfreie Beize kommt zum Einsatz, wenn entweder das durchzufärbende Holz wachsfrei sein soll oder wenn es bereits in einem vorausgegangenen Schritt mit einer wässrigen Paraffin-Dispersion beispielsweise bei erhöhtem Druck und erhöhter Temperatur in einem Autoklaven behandelt wurde. Dieser Behandlungsschritt kann bei Importhölzern bereits im Ursprungsland durchgeführt werden. Dies hat den Vorteil, daß während Lagerung und Transport das Holz praktisch vor Schädlingsbefall und gegebenenfalls vor unerwünschter Feuchtigkeitsaufnahme geschützt ist. Ein Vorteil der Beize nach Beispiel 2 liegt darin, daß sie im Vergleich zu wachshaltigen Beizen stabiler ist. Diese neigen nämlich dazu, sich aufgrund der rauhen Beizbedingungen (Druck, Temperatur, Behandlungsdauer) und dem Salzanteil der Farbstoffe zu entmischen und unbrauchbar zu werden. Der Beizvorgang selbst entspricht im wesentlichen dem in Beispiel 1.

**Patentansprüche**

1. Schwarzbeize zum Ein- und Durchfärben von Holz, mit einem Lösungsmittel und darin gelöst einem Schwarzfärbemittel,
   dadurch gekennzeichnet,
   daß das Schwarzfärbemittel eine Mischung aus Buntfarbstoffen ist.

2. Schwarzbeize nach Anspruch 1,
   dadurch gekennzeichnet,
   daß das Lösungsmittel Wasser ist und die Farbstoffe wasserlöslich sind.

3. Schwarzbeize nach Anspruch 1 oder 2,
   dadurch gekennzeichnet,
   daß zumindest die Buntfarbstoffe lebensmittelecht sind.

4. Schwarzbeize nach Anspruch 3,
   dadurch gekennzeichnet,
   daß die Farbstoffmischung die Farbstoffe
   CI Acid Yellow 23
   CI Acid Red 18 und
   CI Acid Blue 9
   enthält.

5. Schwarzbeize nach Anspruch 4,
   gekennzeichnet durch
   folgende Zusammensetzung der Farbmischung (Gew.%):

| CI Acid Yellow 23: | 16 % |
|---|---|
| CI Acid Red 18: | 56 % |
| CI Acid Blue 9: | 28 % |

6. Beize nach einem der Ansprüche 1 bis 5,
dadurch gekennzeichnet,
daß ein Netzmittel und ein Konservierungsmittel enthalten sind.

7. Beize nach Anspruch 6,
dadurch gekennzeichnet,
daß das Netzmittel Polyoxyethylen-(20)-sorbitan-monolaurat und das Konservierungsmittel ein Gemisch aus Chlorazetamid und Natriumbenzoat ist.

8. Beize nach Anspruch 6 oder 7,
gekennzeichnet durch
folgende Zusammensetzung (Gew. %):

| Farbstoffmischung: | 1 - 20 % |
|---|---|
| Netzmittel: | 0,01 - 5 % |
| Konservierungsmittel: | 0,1 - 2,0 % |
| Rest: Wasser. | |

9. Beize nach Anspruch 8,
gekennzeichnet durch
folgende Zusammensetzung (Gew. %):

| Farbstoffmischung: | 5% |
|---|---|
| Netzmittel: | 0,1 % |
| Konservierungsmittel: | 0,2 % |
| Rest Wasser. | |

10. Beize nach einem oder mehreren der Ansprüche 1 bis 9,
dadurch gekennzeichnet,
daß eine Wachsdispersion enthalten ist.

11. Beize nach Anspruch 10,
dadurch gekennzeichnet,
daß 8,3 Gew. % einer 30 %igen wässrigen Paraffindispersion enthalten sind.

12. Verwendung einer Beize gemäß einem oder mehreren der Ansprüche 1 bis 11 zum Ein- und Durchfärben von Holz insbesondere für die Herstellung von Schreib- und Kosmetikstiften.

13. Verfahren zum Ein- oder Durchfärben von Holz,
gekennzeichnet durch die folgenden Verfahrensschritte:
a) Befüllen eines Färbeautoklaven mit einer Beize gemäß einem oder mehreren der Ansprüche 1 bis 11,
b) Einlegen von Holzzuschnitten derart, daß die Beize diese vollständig bedeckt,
c) Schließen des Autoklaven und Behandeln der Holzzuschnitte unter erhöhtem Druck und erhöhter Temperatur,
d) Abkühlung und Druckentlastung des Autoklaven,
e) Öffnen des Autoklaven und Entnahme der ein- oder durchgefärbten Holzzuschnitte.

**14.** Verfahren nach Anspruch 12,
gekennzeichnet durch
einen Druck von 15 bar, einer Temperatur von 60 - 70°C und einer Behandlungsdauer von 24 Stunden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | CHEMICAL ABSTRACTS, vol. 74, no. 6, 8. Februar 1971, Columbus, Ohio, US; abstract no. 23777a, 'dyeing woods' * Zusammenfassung * | 1-3 | B27K5/02 C09B67/00 |
| A | & JP-A-45 018 398 (TOA GOSEI CHEMICAL INDUSTRIE) --- | 4-14 | |
| X | FR-A-2 305 283 (DR WOLMAN GMBH) | 1-3 | |
| A | * Seite 9; Beispiel 8 * --- | 4-14 | |
| P,X | EP-A-0 534 112 (RUAN CO.,LTD.) | 1-3 | |
| P,A | * Ansprüche * ----- | 4-14 | |

| RECHERCHIERTE SACHGEBIETE (Int.Cl.5) |
|---|
| B27K C09B |

Der vorliegende Recherchenbericht wurde für alle Patentansprüche erstellt

| Recherchenort | Abschlußdatum der Recherche | Prüfer |
|---|---|---|
| DEN HAAG | 2. Februar 1994 | Dalkafouki, A |